# FASCICULE DE BREVET EUROPEEN

(11) **EP 0 559 589 B1**
(45) Date de publication et mention de la délivrance du brevet: **18.01.1995**
(21) Numéro de dépôt: 93420095.7
(22) Date de dépôt: 03.03.1993
(51) Int. Cl.: C21C 7/00, B23K 35/40, C21C 1/02, C21C 1/10, C21C 7/064

(54) **Fil composite à gaine plastique pour additions à des bains métalliques**
Fülldraht für Zusätze zu Metallbädern mit einer Plastikhülle
Cored wire with a plastic sheath for additions to metal baths

(30) Priorité: 05.03.1992 FR 9202867
(43) Date de publication de la demande: 08.09.1993
(73) Titulaire: PECHINEY ELECTROMETALLURGIE, 92400 Courbevoie (FR)
(72) Inventeur: Margaria, Thomas, F-74190 Passy (FR); Rebiere, Michel, F-74190 Passy (FR)
(74) Mandataire: Jacquet, Michel

(56) Documents cités:
- EP-A- 0 032 874
- WO-A-79/00536
- CH-A- 665 852
- DE-A- 2 743 968
- FR-A- 2 260 622
- US-A- 4 159 906

## Description

### DOMAINE TECHNIQUE DE L'INVENTION.

Le domaine technique de l'invention concerne les fils composites comprenant une gaine cylindrique continue et une âme constituée d'un produit d'addition.
La métallurgie secondaire ou métallurgie d'affinage pratiquée en poche sur du métal en fusion nécessite souvent l'addition de produits solides dans des bains métalliques. La technique du fil fourré à gaine métallique, le plus souvent en fer, que l'on introduit progressivement dans le bain, est connue pour sa grande souplesse et ses performances: l'introduction des produits d'addition, dans et non pas sur le bain en fusion, minimise les pertes par volatilisation et par oxydation, ce qui entraine des rendements matière à la fois élevés et constants.
Le fil fourré à gaine métallique présente cependant deux inconvénients, son coût élevé et sa dissolution relativement lente dans un bain de fonte dont la température est inférieure à 1450°C.

### PROBLEME POSE.

Les inventeurs se sont posé le problème de trouver un substitut aux fils fourrés à gaine acier qui soit meilleur marché et ne présente pas les inconvénients de dissolution lente dans les bains de fonte de ces fils.

### OBJET DE L'INVENTION.

L'invention a pour premier objet des fils composites pour addition de produits solides à des bains métalliques dont l'âme est constituée essentiellement de ces produits d'addition et la gaine de matière plastique.

L'invention a pour deuxième objet un procédé de fabrication de ces fils composites.

### DESCRIPTION DE L'ART ANTERIEUR.

Il est connu d'introduire dans un bain de métal fondu des additifs de traitement par l'intermédiaire de fils fourrés dont l'âme est constituée de ces additifs et l'enveloppe d'une gaine métallique continue.
Cette technique est, en particulier illustrée dans le brevet français 2 392 120 (Metal Research Corporation) et dans le brevet européen 0 141 760 (Vallourec)

Le brevet US 4 163 827 (Caterpillar Tractor Co.)issu de la demande WO 79 00536 décrit un procédé de fabrication d'un fil tubulaire pour l'inoculation consistant à extruder une âme composée d'un mélange de l'agent de traitement et d'un liant et d'envelopper en hélice cette âme extrudée d'un ruban de protection extérieur. De façon préférentielle, ce ruban est une feuille métallique: acier, aluminium, cuivre ou titane. Ce peut être aussi un matériau organique tel du plastique ou du papier fibreux.

La demande de brevet européen EP 0 032 874 (Arbed S.A.) décrit un fil fourré comprenant une gaine métallique constituée par un feuillard mince, un additif enfermé à l'intérieur de la gaine, l'additif étant entouré par une enveloppe en matière synthétique ou métallique sous la forme d'un feuillard qui présente une épaisseur inférieure à 100 micromètres et permet d'assurer l'étanchéité. La description indique quelques exemples de matière synthétique: le polyéthylène, les polyesters ou le chlorure de polyvinyle.

Le brevet suisse CH 665 852 décrit un procédé d'addition de réactifs à un bain de métal dans lequel le réactif sous forme pulvérulente est enfermé dans un tube souple qui est dévidé dans le bain métallique. Le tube souple est ou en plastique ou en matière fibreuse telle la cellulose.

### DESCRIPTION DE L'INVENTION.

La lecture des documents de l'art antérieur montre que l'obtention de tels fils composites se heurte à deux types de difficultés: l'étanchéité de la gaine et la cohésion et l'homogénéité de l'âme. Dans la demande WO 79 00536, l'étanchéité est assurée soit par un recouvrement partiel des spires successives, soit par deux enroulements hélicoïdaux superposés avec deux angles différents. L'homogénéité de l'âme est assurée par l'extrusion du produit d'addition mélangé à un liant. Dans la demande de brevet européen EP 0 032 874, l'étanchéité est obtenue par une double enveloppe dont l'intérieure, en plastique, est, soit adhésive sur l'enveloppe extérieure, soit thermorétractable. Dans le brevet suisse CH 665 852, l'étanchéité est réalisée facilement par l'utilisation d'un tube souple mais le remplissage de ce tube par un mélange de poudres sans liant pose à l'évidence des problèmes de cohésion et d'homogénéité.

Les inventeurs ont trouvé qu'il était possible de fabriquer des fils composites dont l'âme est constituée de l'agent de traitement que l'on veut introduire dans le métal liquide mélangé avec un liant et dont la gaine extérieure est constituée de polymère, par extrusion simultanée ou coextrusion de l'âme et de la gaine qui est ainsi constituée d'un tube continu sans soudure. Les problèmes d'étanchéité, de cohésion et d'homogénéité sont ainsi bien résolus en particulier lorsque le liant et le polymère de la gaine sont identiques. Pour procéder à cette co-extrusion, on applique une technique utilisée dans un domaine éloigné: celui du gainage de câbles électriques.

A cet effet, l'agent de traitement est mélangé intimement avec un polymère thermoplastique en poudre, du polyéthylène par exemple. La quantité de polymère à utiliser est comprise de préférence entre 2 et 30 % du poids total du mélange. Le fil composite est ensuite fabriqué par co-extrusion avec un gaine de polymère thermoplastique, polyéthylène par exemple qui constitue l'enveloppe extérieure d'un fil composite continu que l'on peut bobiner directement à la sortie de la filière.

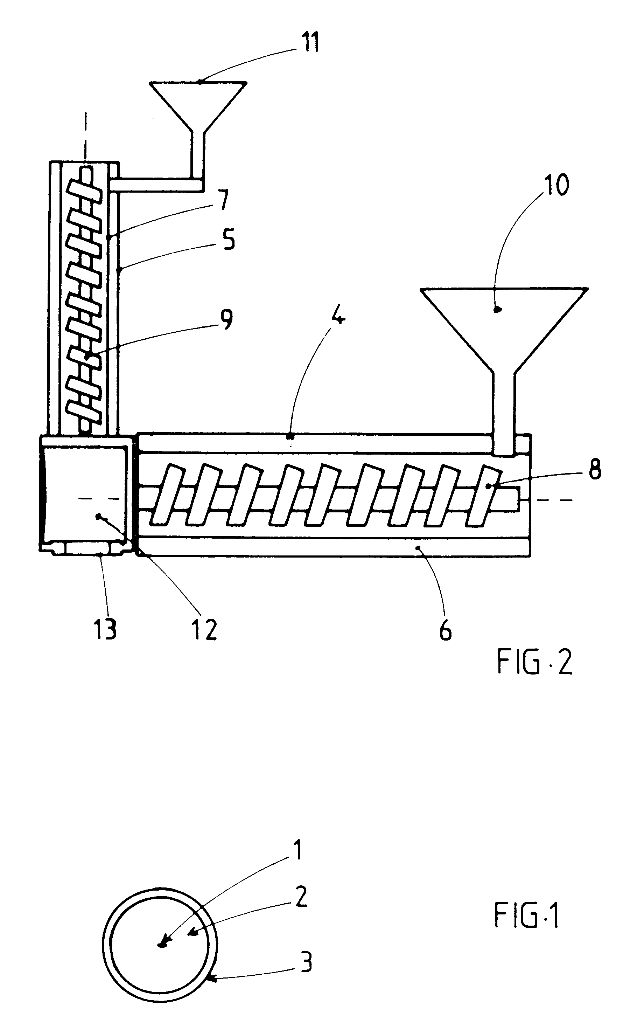

En variante de cette mise en oeuvre, il est également possible d'améliorer la résistance à la traction du fil composite ainsi fabriqué en noyant au cours de l'extrusion un fil métallique continu au centre de l'âme du fil composite. On obtient ainsi un fil composite dont la section est représentée sur la figure 1. Ce fil comprend trois parties: le fil central de renforcement (1), l'âme constituée du mélange réactif lié par un polymère thermoplastique, du polyéthylène par exemple, (2) et la gaine extérieure en polymère (3).

La coextrusion se pratique de façon connue, par exemple à l'aide d'un appareil analogue à celui utilisé pour la coextrusion de câbles gainés et dont le principe est représenté sur la figure 2.
L'appareil se présente comme une combinaison de deux extrudeuses (4) et (5) comportant chacune essentiellement un tube creux ou fourreau (6) et (7) pouvant être chauffée par des moyens non représentés, une vis sans fin centrale (8) et (9) et une trémie pour l'alimentation du produit à extruder (10) et (11). Ces deux extrudeuses sont disposées à angle droit et reliées par une tête d'équerre (12) munie d'une filière (13) constituant la sortie de l'extrudeuse. La tête d'équerre comporte également, de façon connue, des moyens non représentés pour le guidage du fil central éventuel et des canaux de distribution pour le polymère destiné au gainage. La trémie (10) est alimentée en mélange de poudre de produit réactif, magnésium, carbure de calcium par exemple, et de polymère thermoplastique, la trémie (11) uniquement en polymère thermoplastique destinée à la fabrication de la gaine.

Les deux techniques de mise en oeuvre de l'invention décrites ci-dessus sont extrêmement avantageuses pour le producteur, en particulier dans le domaine de la sécurité. Le personnel n'est jamais en contact, pendant le processus de fabrication avec les produits d'addition dont la réactivité peut être dangereuse. Ces produits sont stockés dans des silos maintenus sous atmosphère inerte, azote par exemple et transférés par gravité dans la trémie d'alimentation de l'extrudeuse, également maintenue sous gaz inerte. Le produit aggloméré et mélangé à la matière plastique est, lui, beaucoup plus inerte chimiquement et peut être tronçonné ou bobiné à l'air libre.

Les produits obtenus par la mise en oeuvre de l'invention offrent aussi un grand avantage pour l'utilisateur.
Par rapport au produit d'addition en grains, ces fils composites produit d'addition-plastique gainés de plastique présentent trois avantages:
1°) Ils libèrent progressivement le produit d'addition puisque la matière plastique de l'âme forme une barrière thermique entre les grains. La réaction du produit d'addition avec le bain est ainsi beaucoup moins violente, ce qui réduit les pertes et améliore donc le rendement.
2°) Ils permettent d'utiliser des produits d'addition plus divisés avec une surface spécifique plus élevée donc plus réactifs. La présence de matière plastique mélangée au réactif assure en effet une réaction progressive comme cela vient d'être dit.
3°) Le dégagement des gaz de décomposition de la matière plastique contenue assure une meilleure dispersion du produit d'addition dans le bain. On obtient ainsi des performances comparables à celles d'une injection de produits d'addition micronisés.

Par rapport au fil fourré à gaine acier, le fil composite à gaine plastique présente deux avantages:
1°) Il est moins cher.
2°) Il se dissout plus rapidement dans les fontes traitées à relativement basses températures (inférieures à 1450°C). Cette lenteur de dissolution du fil fourré constitue un des obstacles à l'utilisation du fil fourré pour les additions dans les fontes traitées souvent à basse température.

Les applications industrielles des produits selon l'invention concernent tous les domaines techniques dans lesquels il est nécessaire d'introduire un réactif solide dans un bain de métal fondu. Parmi ceux-ci on peut citer la désulfuration des fontes d'affinage ou de moulage, la nodulisation et l'inoculation des fontes de moulage.

La désulfuration des fontes, qu'elles soient d'affinage c'est-à-dire destinées à la fabrication de l'acier, ou de moulage, destinées en particulier à la fabrication de pièces en fonte à graphite sphéroïdal, vise à abaisser la teneur en soufre à 0,005 -0,010 %.

La plupart des agents désulfurants sont à base de deux alcalino-terreux : le magnésium et le calcium qui se combinent facilement avec le soufre pour donner des sulfures, en formant des scories insolubles dans la fonte. Le magnésium excédentaire s'élimine du fait de sa tension de vapeur élevée à la température de traitement, le carbure de calcium excédentaire, sous forme de scories. Ainsi, on utilise, séparément ou en combinaison, du magnésium métallique, du carbonate de calcium, de la chaux, de la chaux diamide (mélange de carbonate de Ca et de carbone) et du carbure de calcium, additionnés éventuellement de produits destinés à améliorer la coulabilité du mélange désulfurant ou à dégager des gaz permettant une bonne répartition du désulfurant dans la fonte liquide.
Ces désulfurants sont, en effet, le plus souvent, injectés à l'aide d'une lance,en suspension dans un gaz porteur inerte.

Une des applications de l'invention est un procédé de fabrication de fils composites dont l'âme est constituée de poudres fines de magnésium et/ou de carbure de calcium agglomérées et la gaine d'une matière plastique.

L'invention propose ainsi une alternative aux produits à base de carbure de calcium et/ou de magnésium injectés à la lance en permettant l'utilisation en toute sécurité de produits de plus fine granulométrie.

Mais les produits fabriqués selon l'invention se révèlent aussi bien adaptés à la nodulisation et à l'inoculation des fontes de moulage.
Le traitement de nodulisation des fontes consiste à former, à partir du carbone présent dans les fontes, un graphite sphéroïdal appelé aussi nodulaire, ce qui améliore sensiblement leur allongement à la rupture et donc leur capacité de déformation. Ce traitement est pratiqué par l'addition à la fonte de différents éléments: magnésium, cérium, terres rares et/ou leurs alliages. La plupart de ces éléments utilisés à l'état pur et sous forme massive réagiraient trop violemment, entrainant des pertes de métal et un mauvais rendement. On les utilise donc le plus souvent sous forme diluée. Ainsi utilise-t-on couramment comme source de magnésium un ferro-silico-magnésium (FeSiMg), introduit par exemple sous forme de fil fourré à âme FeSiMg et à gaine acier.

Le traitement d'inoculation des fontes consiste à introduire dans les fontes des éléments qui favorisent la germination du graphite au détriment de la cémentite (carbure de fer), qui rend les fontes fragiles. Ces éléments sont les alcalins ou alcalinoterreux (calcium) ou le bismuth alliés au silicium.

Ces traitements sont pratiqués dans l'ordre: désulfuration, nodulisation, inoculation. Les deux derniers ont une efficacité relativement fugace en raison de la volatilité des éléments ajoutés. Il sont donc pratiqués souvent de façon tardive, peu de temps avant la coulée des pièces et alors que le métal est à une température assez basse.

Les inventeurs ont trouvé que l'utilisation d'un fil composite dont l'âme est constituée des éléments nodulisants ou inoculants cités plus haut, de leur mélange ou d'un ou plusieurs de leurs alliages et de matière thermoplastique et dont la gaine est en matière thermoplastique convenait très bien pour ces applications: nodulisation, inoculation ou combinaison des deux traitements. En effet, la vitesse de dissolution élevée de ces fils autorise un traitement tardif et à basse température des bains de fonte. En outre, le coût de l'opération est réduit, le fil composite gainé plastique étant moins cher.

### EXEMPLES.

### Exemple 1: Désulfuration par le magnésium.

On a comparé les résultats de désulfuration d'une même fonte en utilisant, d'une part, du magnésium en grains de 0,250 à 2 mm et, d'autre part, un fil composite de diamètre extérieur de 16 mm constitué d'une gaine de polyéthylène de 0,5 mm d'épaisseur et d'une âme composée d'un mélange comprenant 90 % en poids de poudre de magnésium de dimensions inférieures à 200 micromètres et 10 % en poids de polyéthylène.
La quantité de produit actif, c'est-à-dire de magnésium, utilisée était dans chaque cas, de 1,2 kg/tonne de fonte.

On a observé, avec le magnésium en grains une réaction très violente, alors qu'avec le fil composite, la réaction était calme.

Les résultats de désulfuration ont été les suivants:

| | |
|---|---|
| -Soufre initial de la fonte: | 0,06 % |
| -Soufre final-magnésium en grains: | 0,025 % |
| -Soufre final-fil composite: | 0,015 % |

### Exemple 2: Désulfuration par le carbure de calcium.

On a comparé les résultats de désulfuration d'une même fonte en utilisant, d'une part, du carbure de calcium en grains de 0,200 à 2 mm et, d'autre part, un fil composite de diamètre extérieur de 10 mm constitué d'une gaine de polyéthylène de 0,5 mm d'épaisseur et d'une âme composée d'un mélange comprenant 90 % en poids de poudre de carbure de calcium de dimensions inférieures à 100 micromètres et 10 % en poids de polyéthylène.

La quantité de produit actif, c'est-à-dire de carbure de calcium, utilisée était dans chaque cas, de 3 kg/tonne de fonte.

On a observé dans les deux cas une réaction très calme.

Les résultats de désulfuration ont été les suivants:

| | |
|---|---|
| -Soufre initial de la fonte: | 0,06 % |
| -Soufre final-carbure en grains: | 0,055 % |
| -Soufre final-fil composite: | 0,020 % |

### Exemple 3: Désulfuration par le carbure de calcium.

On a comparé les résultats de désulfuration d'une même fonte en utilisant,
d'une part, un fil composite de diamètre extérieur de 10 mm constitué d'une gaine de polyéthylène de 0,5 mm d'épaisseur et d'une âme composée d'un mélange comprenant 90 % en poids de poudre de carbure de calcium de dimensions inférieures à 100 micromètres et 10 % en poids de polyéthylène et comportant en son centre un fil de fer axial de 1 mm de diamètre,
d'autre part, un fil fourré de même diamètre extérieur constitué d'une gaine d'acier de 0,5 mm d'épaisseur et d'une âme de même composition.

On a déterminé la quantité de produit actif, c'est-à-dire de carbure de calcium, nécessaire pour diminuer la teneur en soufre de la fonte de sa teneur initiale de 0,06 % à une valeur finale de 0,010 %.

Les résultats ont été les suivants:

| | |
|---|---|
| -Fil fourré gaine acier: | 3,8 kg/tonne de fonte |
| -Fil composite gaine plastique: | 3,2 kg/tonne de fonte |

### Exemple 4: Nodulisation de la fonte par du fil composite à gaine plastique contenant du magnésium.

On a comparé les résultats de nodulisation d'une même fonte en utilisant,
d'une part, un fil composite de diamètre extérieur de 10 mm constitué d'une gaine de polyéthylène de 0,5 mm d'épaisseur et d'une âme composée d'un mélange comprenant 90 % en poids de poudre de magnésium de dimensions inférieures à 200 micromètres et 10 % en poids de polyéthylène,
d'autre part, un fil fourré de diamètre extérieur de 10 mm constitué d'une gaine d'acier de 0,5 mm d'épaisseur et d'une âme constituée de 90 % de ferro-silico-magnésium et de 10 % de magnésium.
Ces deux fils contenaient la même quantité de magnésium au mètre linéaire.

Les essais de sphéroïdisation ont été faits dans une poche flûte contenant de la fonte à 1450°C.

Au cours de plusieurs séries d'essais poussés jusqu'à la sphéroïdisation complète, (100 % de graphite sphéroïdal), on a comparé le rendement en magnésium, R_{Mg} %, c'est-à-dire le rapport de la quantité de magnésium présente dans la fonte après traitement complet à la quantité introduite.

Les résultats sont les suivants:

| | |
|---|---|
| Avec le fil fourré acier: | 46 % < R_{Mg} < 61 % |
| Avec le fil composite plastique: | 55 % < R_{Mg} < 67 % |

### Exemple 5: Inoculation tardive de fonte grise.

On a comparé les résultats d'inoculation d'une même fonte de composition:
- C =: 3,25 %
- Si =: 2 %
- Mn =: 0,4 %
- S =: 0,1 %
en utilisant un même alliage inoculant du commerce à base de ferro-silicium contenant des alcalino-terreux. Cet inoculant se présentait sous trois formes différentes:
d'une part, des granulés d'alliage introduits dans le jet de fonte liquide,
d'autre part, un fil composite de diamètre extérieur de 5 mm constitué d'une gaine de polyéthylène de 0,25 mm d'épaisseur et d'une âme composée d'un mélange comprenant 90 % en poids de poudre d'alliage inoculant et 10 % en poids de polyéthylène, fabriqué par co-extrusion,
enfin, un fil fourré classique de diamètre extérieur de 5 mm constitué d'une gaine d'acier de 0,5 mm d'épaisseur et d'une âme constituée de 90 % de la même poudre d'alliage inoculant.

L'inoculation était pratiquée à basse température: 1300 à 1350°C.

On a comparé les quantités d'inoculant nécessaires à l'obtention d'un degré d'inoculation identique, caractérisé par le test standard de hauteur de trempe. On a trouvé:
- pour l'inoculation classique au jet, 0,15 % du poids de fonte;
- pour l'inoculation au fil composite plastique, 0,15 % également;
- pour l'inoculation au fil fourré classique: traitement inefficace en raison de la difficulté à dissoudre la gaine acier.

## Revendications

1. Fil composite pour l'introduction de produits d'addition à des bains de métal liquide, comprenant une âme (2) constituée d'un mélange du produit d'addition en poudre et de polymère thermoplastique extrudé et une gaine (3), caractérisé en ce que la gaine (3) est un tube continu sans soudure de polymère thermoplastique coextrudé autour de l'âme (2).

2. Fil composite (1,2,3) pour l'introduction de produits d'addition à des bains de métal liquide selon la revendication 1, caractérisé en ce que le polymère thermoplastique mélangé au produit d'addition en poudre de l'ame (2) et le polymère thermoplastique de la gaine (3) sont tous deux du polyéthylène.

3. Fil composite (1,2,3) pour l'introduction de produits d'addition à des bains de métal liquide selon l'une des revendication 1 ou 2, caractérisé en ce qu'il comprend un fil métallique (1) continu noyé au centre de l'âme (2).

4. Fil composite (1,2,3) pour l'introduction de produits désulfurants dans de la fonte liquide selon l'une des revendications 1 à 3, caractérisé en ce que l'âme (2) est constituée d'un mélange de poudre de carbure de calcium et de polymère thermoplastique.

5. Fil composite (1,2,3) pour l'introduction de produits désulfurants dans de la fonte liquide selon l'une des revendications 1 à 3, caractérisé en ce que l'âme (2) est constituée d'un mélange de poudre de magnésium et de polymère thermoplastique.

6. Fil composite (1,2,3) pour l'introduction de produits désulfurants dans de la fonte liquide selon l'une des revendications 1 à 3, caractérisé en ce que l'âme est constituée d'un mélange de poudres de carbure de calcium et de magnésium et de polymère thermoplastique.

7. Fil composite (1,2,3) pour l'introduction de produits nodulisants dans de la fonte liquide selon l'une des revendications 1 à 3, caractérisé en ce que l'âme (2) est constituée d'un mélange d'un ou plusieurs éléments nodulisants et/ou de leurs alliages et de polymère thermoplastique.

8. Fil composite (1,2,3) pour l'introduction de produits nodulisants dans de la fonte liquide selon la revendication 7 caractérisé en ce que les éléments nodulisants sont choisis dans le groupe constitué par le magnésium, le cérium, les métaux des terres rares.

9. Fil composite (1,2,3) pour l'introduction de produits inoculants dans de la fonte liquide selon l'une des revendications 1 à 3, caractérisé en ce que l'âme (2) est constituée d'un mélange d'un ou plusieurs éléments inoculants et/ou de leurs alliages et de polymère thermoplastique.

10. Fil composite (1,2,3) pour l'introduction de produits inoculants dans de la fonte liquide selon la revendication 9 caractérisé en ce que les éléments inoculants sont choisis dans le groupe constitué par les métaux alcalins, alcalinoterreux et le bismuth, alliés au silicium.

11. Fil composite (1,2,3) pour l'introduction de produits d'addition à des bains de métal liquide selon l'une des revendication 1 à 10, caractérisé en ce que le mélange de produit d'addition et de polymère contient de 2 à 30 % en poids de polymère.

12. Procédé de fabrication de fil composite pour l'introduction de produits d'addition à des bains de métal liquide, caractérisé en ce que:
- l'on mélange, éventuellement sous gaz inerte 70 à 98 % en poids de poudre du produit d'addition avec 2 à 30 % en poids de poudre de polymère thermoplastique;
- l'on extrude, éventuellement sous gaz inerte, le mélange ainsi obtenu, sous forme d'un produit continu de section circulaire ou elliptique;
- l'on co-extrude, autour de ce produit continu, une gaine de polymère thermoplastique.
- l'on extrait, à la sortie un fil composite continu.

13. Procédé de fabrication de fil composite selon la revendication 12, caractérisé en ce que le polymère thermoplastique mélangé à la poudre de produit d'addition et le polymère thermoplastique de la gaine sont tous deux du polyéthylène.

14. Procédé de fabrication de fil composite selon l'une des revendications 12 ou 13, caractérisé en ce qu'un fil métallique est introduit en continu au centre de l'âme.

15. Procédé de fabrication de fil composite selon l'une des revendications 12 à 14, caractérisé en ce que le produit d'addition mélangé à la poudre de polymère est du carbure de calcium.

16. Procédé de fabrication de fil composite selon l'une des revendications 12 à 14, caractérisé en ce que le produit d'addition mélangé à la poudre de polymère est du magnésium.

17. Procédé de fabrication de fil composite selon l'une des revendications 12 à 14, caractérisé en ce que le produit d'addition mélangé à la poudre de polymère est constitué d'un mélange de poudres de carbure de calcium et de magnésium.

18. Procédé de fabrication de fil composite selon l'une des revendications 12 à 14, caractérisé en ce que le produit d'addition mélangé à la poudre de polymère est constitué d'un mélange de poudres d'un ou plusieurs éléments nodulisants choisis dans le groupe constitué par le magnésium, le cérium, les métaux des terres rares et/ou leurs alliages.

19. Procédé de fabrication de fil composite selon l'une des revendications 12 à 14, caractérisé en ce que le produit d'addition mélangé à la poudre de polymère est constitué d'un mélange de poudres d'un ou plusieurs éléments inoculants choisis dans le groupe constitué par les métaux alcalins, alcalinoterreux, le bismuth alliés au silicium.

20. Fil composite (1,2,3) pour l'introduction de produits d'addition dans de la fonte liquide selon l'une des revendications 7 à 10, caractérisé en ce qu'il contient à la fois des éléments nodulisants et des éléments inoculants.

21. Procédé de fabrication de fil composite selon l'une des revendications 18 ou 19, caractérisé en ce que le produit d'addition mélangé à la poudre de polymère est constitué d'un mélange de poudres d'un ou plusieurs éléments nodulisants et d'un ou plusieurs éléments inoculants.

## Claims

1. Composite wire for the introduction of addition products into baths of liquid metal comprising a core (2) consisting of a mixture of the addition product in powdered form and of extruded thermoplastic polymer and a sheath (3) characterised in that the sheath (3) is a continuous seamless tube of thermoplastic polymer which is co-extruded round the core (2).

2. Composite wire (1, 2, 3) for the introduction of addition products into baths of liquid metal according to claim 1, characterised in that the thermoplastic polymer mixed with the addition product in powdered form of the core (2) and the thermoplastic polymer of the sheath (3) are both polyethylene.

3. Composite wire (1, 2, 3) for the introduction of addition products into baths of liquid metal according to one of claims 1 or 2, characterised in that it comprises a continuous metal wire (1) immersed in the centre of the core (2).

4. Composite wire (1, 2, 3) for the introduction of desulphurising products into liquid cast iron according to one of claims 1 to 3, characterised in that the core (2) consists of a mixture of calcium carbide powder and thermoplastic polymer.

5. Composite wire (1, 2, 3) for the introduction of desulphurising products into liquid cast iron according to one of claims 1 to 3, characterised in that the core (2) consists of a mixture of magnesium powder and thermoplastic polymer.

6. Composite wire (1, 2, 3) for the introduction of desulphurising products into liquid cast iron according to one of claims 1 to 3, characterised in that the core (2) consists of a mixture of calcium carbide and magnesium powders and of thermoplastic polymer.

7. Composite wire (1, 2, 3) for the introduction of nodulising products into liquid cast iron according to one of claims 1 to 3, characterised in that the core (2) consists of a mixture of one or more nodulising elements and/or their alloys and thermoplastic polymer.

8. Composite wire (1, 2, 3) for the introduction of nodulising products into liquid cast iron according to claim 7, characterised in that the nodulising elements are selected from the group consisting of magnesium, cerium, rare earth metals.

9. Composite wire (1, 2, 3) for the introduction of inoculating products into liquid cast iron according to one of claims 1 to 3, characterised in that the core (2) consists of a mixture of one or more inoculating elements and/or their alloys and thermoplastic polymer.

10. Composite wire (1, 2, 3) for the introduction of inoculating products into liquid cast iron according to claim 9, characterised in that the inoculating elements are selected from the group consisting of alkali and alkaline earth metals and bismuth, alloyed with silicon.

11. Composite wire (1, 2, 3) for the introduction of addition products into baths of liquid metal according to one of claims 1 to 10, characterised in that the mixture of addition product and polymer contains 2 to 30% by weight of polymer.

12. Process for producing a composite wire for the introduction of addition products into baths of liquid metal, characterised in that 70 to 98% by weight of powder of the addition product is mixed, optionally under inert gas, with 2 to 30% by weight of thermoplastic polymer powder;
- the mixture thus obtained is extruded, optionally under inert gas, in the form of a continuous product of circular or elliptical cross section;
- a sheath of thermoplastic polymer is coextruded round this continuous product;
- a continuous composite wire is extracted at the outlet.

13. Process for producing composite wire according to claim 12, characterised in that the thermoplastic polymer mixed with the powder of addition product and the thermoplastic polymer of the sheath are both polyethylene.

14. Process for producing composite wire according to one of claims 12 or 13, characterised in that a metal wire is introduced continuously into the centre of the core.

15. Process for producing composite wire according to one of claims 12 to 14, characterised in that the addition product mixed with the polymer powder is calcium carbide.

16. Process for producing composite wire according to one of claims 12 to 14, characterised in that the addition product mixed with the polymer powder is magnesium.

17. Process for producing composite wire according to one of claims 12 to 14, characterised in that the addition product mixed with the polymer powder consists of a mixture of calcium carbide and magnesium powders.

18. Process for producing composite wire according to one of claims 12 to 14, characterised in that the addition product mixed with the polymer powder consists of a mixture of powders of one or more nodulising elements selected from the group consisting of magnesium, cerium, rare earth metals and/or alloys thereof.

19. Process for producing composite wire according to one of claims 12 to 14, characterised in that the addition product mixed with the polymer powder consists of a mixture of powders of one or more inoculating elements selected from the group consisting of alkali and alkaline earth metals, bismuth alloyed with silicon.

20. Composite wire (1, 2, 3) for the introduction of addition products into liquid cast iron according to one of claims 7 to 10, characterised in that it contains nodulising elements as well as inoculating elements.

21. Process for producing composite wire according to one of claims 18 or 19, characterised in that the addition product mixed with the polymer powder consists of a mixture of powders of one or more nodulising elements and one or more inoculating elements

## Patentansprüche

1. Verbunddraht (1,2,3) zum Einführen von Zusatzstoffen in Bäder flüssigen Metalls mit einem Kern (2), der aus einem extrudierten Gemisch des Zusatzstoffes in Pulverform und von thermoplastischem Polymer gebildet wird, und einer Hülle (3)
dadurch gekennzeichnet,
daß die Hülle ein durchgehendes Rohr ohne Schweißung aus um den Kern (2) koextrudiertem thermoplastischem Polymer ist.

2. Verbunddraht (1, 2, 3) zum Einführen von Zusatzstoffen in Bäder flüssigen Metalls nach dem Anspruch 1,
dadurch gekennzeichnet, daß das mit dem Zusatzstoff in Pulverform des Kerns (2) vermischte thermoplastische Polymer und das thermoplastische Polymer der Hülle (3) beide Polyethylen sind.

3. Verbunddraht (1, 2, 3) zum Einführen von Zusatzstoffen in Bäder flüssigen Metalls nach einem der Ansprüche 1 oder 2,
dadurch gekennzeichnet, daß er einen in der Mitte des Kerns (2) eingebetteten durchlaufenden Metalldraht (1) aufweist.

4. Verbunddraht (1, 2, 3) zum Einführen von entschwefelnden Stoffen in flüssiges Gußeisen nach einem der Ansprüche 1 bis 3,
dadurch gekennzeichnet, daß der Kern (2) aus einem Gemisch von Calciumkarbidpulver und thermoplastischem Polymer besteht.

5. Verbunddraht (1, 2, 3) zum Einführen von entschwefelnden Stoffen in flüssiges Gußeisen nach einem der Ansprüche 1 bis 3,
dadurch gekennzeichnet, daß der Kern (2) aus einem Gemisch von Magnesiumpulver und thermoplastischem Polymer besteht.

6. Verbunddraht (1, 2, 3) zum Einführen von entschwefelnden Stoffen in flüssiges Gußeisen nach einem der Ansprüche 1 bis 3,
dadurch gekennzeichnet, daß der Kern aus einem Gemisch von Calciumkarbid- und Magnesiumpulvern und thermoplastischem Polymer besteht.

7. Verbunddraht (1, 2, 3) zum Einführen nodulisierender Stoffe in flüssiges Gußeisen nach einem der Ansprüche 1 bis 3,
dadurch gekennzeichnet, daß der Kern aus einem Gemisch eines oder mehrerer nodulisierender Elemente und/oder ihrer Legierungen und von thermoplastischem Polymer besteht.

8. Verbunddraht (1, 2, 3) zum Einführen nodulisierender Stoffe in flüssiges Gußeisen nach dem Anspruch 7,
dadurch gekennzeichnet, daß die nodulisierenden Elemente aus der aus Magnesium, Cer und den Seltenen Erdmetallen bestehenden Gruppe gewählt sind.

9. Verbunddraht (1, 2, 3) zum Einführen von Impfstoffen in flüssiges Gußeisen nach einem der Ansprüche 1 bis 3,
dadurch gekennzeichnet, daß der Kern (2) aus einem Gemisch eines oder mehrerer Impfelemente und/oder ihrer Legierungen und von thermoplastischem Polymer besteht.

10. Verbunddraht (1, 2, 3) zum Einführen von Impfstoffen in flüssiges Gußeisen nach dem Anspruch 9,
dadurch gekennzeichnet, daß die Impfelemente aus der aus den Alkalimetallen, den Erdalkalimetallen und Wismut als Legierungen mit Silizium bestehenden Gruppe gewählt sind.

11. Verbunddraht (1, 2, 3) zum Einführen von Zusatzstoffen in Bäder flüssigen Metalls nach einem der Ansprüche 1 bis 10,
dadurch gekennzeichnet, daß das Zusatzstoff- und Polymergemisch 2 bis 30 Gew.% Polymer enthält.

12. Verfahren zur Herstellung eines Verbunddrahts zum Einführen von Zusatzstoffen in Bäder flüssigen Metalls,
**dadurch gekennzeichnet, daß:**
- man, eventuell unter inertem Gas, 70 bis 98 Gew.% des Zusatzstoffs mit 2 bis 30 Gew.% eines thermoplastischen Polymerpulvers vermischt;
- man, eventuell unter inertem Gas, das so erhaltene Gemisch in Form eines durchgehenden Erzeugnisses kreisförmigen oder elliptischen Querschnitts extrudiert;
- man um dieses durchgehende Erzeugnis herum eine Hülle aus thermoplastischem Polymer koextrudiert; und
- man am Auslaß einen durchgehenden Verbunddraht abzieht.

13. Verfahren zur Herstellung eines Verbunddrahts nach dem Anspruch 12,
dadurch gekennzeichnet, daß das mit dem Zusatzstoffpulver vermischte thermoplastische Polymer und das thermoplastische Polymer der Hülle beide Polyethylen sind.

14. Verfahren zur Herstellung eines Verbunddrahts nach einem der Ansprüche 12 oder 13,
dadurch gekennzeichnet, daß ein Metalldraht durchlaufend in der Mitte des Kerns eingeführt wird.

15. Verfahren zur Herstellung eines Verbunddrahts nach einem der Ansprüche 12 bis 14,
dadurch gekennzeichnet, daß der mit dem Polymerpulver vermischte Zusatzstoff Calciumkarbid ist.

16. Verfahren zur Herstellung eines Verbunddrahts nach einem der Ansprüche 12 bis 14,
dadurch gekennzeichnet, daß der mit dem Polymerpulver vermischte Zusatzstoff Magnesium ist.

17. Verfahren zur Herstellung eines Verbunddrahts nach einem der Ansprüche 12 bis 14,
dadurch gekennzeichnet, daß der mit dem Polymerpulver vermischte Zusatzstoff aus einer Mischung von Calciumkarbid- und Magnesiumpulvern besteht.

18. Verfahren zur Herstellung eines Verbunddrahts nach einem der Ansprüche 12 bis 14,
dadurch gekennzeichnet, daß der mit dem Polymerpulver vermischte Zusatzstoff aus einem Gemisch von Pulvern eines oder mehrerer aus der aus Magnesium, Cer, den Seltenen Erdmetallen und/oder deren Legierungen bestehenden Gruppe gewählter nodulisierender Elementen gebildet wird.

19. Verfahren zur Herstellung eines Verbunddrahts nach einem der Ansprüche 12 bis 14,
dadurch gekennzeichnet, daß der mit dem Polymerpulver vermischte Zusatzstoff aus einem Gemisch von Pulvern eines oder mehrerer aus der aus den Alkalimetallen, den Erdalkalimetallen und Wismut als Legierungen mit Silizium bestehenden Gruppe gewählter Impfelemente gebildet wird.

20. Verbunddraht (1, 2, 3) zum Einführen von Zusatzstoffen in flüssiges Gußeisen nach einem der Ansprüche 7 bis 10,
dadurch gekennzeichnet, daß er gleichzeitig nodulisierende und impfende Elemente enthält.

21. Verfahren zur Herstellung eines Verbunddrahts nach einem der Ansprüche 18 oder 19,
dadurch gekennzeichnet, daß der mit dem Polymerpulver vermischte Zusatzstoff aus einem Gemisch von Pulvern eines oder mehrerer nodulisierender Elemente und eines oder mehrerer Impfelemente gebildet wird.
